# EUROPEAN PATENT SPECIFICATION

(11) **EP 2 457 883 B1**
(45) Date of publication and mention of the grant of the patent: **13.12.2017**
(21) Application number: 09847473.7
(22) Date of filing: 23.07.2009
(51) Int. Cl.: C03C 4/12, C03C 3/15, C03C 3/068, C09K 11/77

(54) **LUMINESCENT BORATE GLASS AND PREPARATION METHOD THEREOF**
LUMINESZENTES BORATGLAS UND HERSTELLUNGSVERFAHREN DAFÜR
VERRE BORATÉ LUMINESCENT ET SON PROCÉDÉ DE PRÉPARATION

(43) Date of publication of application: 30.05.2012
(73) Proprietor: Ocean's King Lighting Science&Technology Co., Ltd., Shenzhen, Guangdong 518054 (CN)
(72) Inventor: ZHOU, Mingjie, Shenzhen Guangdong 518052 P.R. China (CN); LI, Qingtao, Guangdong 518052 P.R. China (CN); MA, Wenbo, Guangdong 518052 P.R. China (CN)
(74) Representative: Michalski Hüttermann & Partner Patentanwälte mbB
(86) International application number: PCT/CN2009/072891
(87) International publication number: WO 2011/009238

(56) References cited:
- EP-A1- 0 265 983
- EP-A1- 0 266 812
- CN-A- 1 364 738
- CN-A- 1 405 106
- US-A- 4 751 148

## Description

### FIELD OF THE INVENTION

The present disclosure relates to luminescent materials, and more particularly relates to a luminescent borate glass and preparation method thereof.

### BACKGROUND OF THE INVENTION

At present, phosphor is a conventional luminescent material. The fluorescent materials used in the field emission devices are those phosphors used in conventional CRT (cathode ray tube) or projection TV CRT, such as sulfide-type, oxide-type, and sulfur-oxide-type. Sulfide-type and sulfur-oxide-type phosphor is conductive and it can exhibit an intense luminescent, however, it is tend to decompose sulfide gases during electron excitation, subsequently causing the cathode to deteriorate. Since sulfide and other precipitates may cover the phosphor, the luminous efficiency of phosphors and the life time of the field emission displays are tend to decrease.

EP 0 266 812 A1 refers to a luminescent aluminosilicate and/or alumino-borate glass comprising lanthanum and/or gadolinium and activated by a rare earth metal as well as to a luminescent screen provided with such a glass.

US 4 751 148 refers to a a luminescent aluminoborate and/or aluminosilicate glass which is activated by one or more rare earth metals.

As a new luminescent glass, the luminescent borate glass has gained more and more attention in such electronic fields as laser, optical communication, and optical amplifiers, for the feature of high transmittance. However, the conventional luminescent borate glass suffers from some disadvantages such as relatively low luminous intensity, poor uniformity and low stability.

Therefore, there is room for improvement within the art.

### SUMMARY OF THE INVENTION

In one aspect of present disclosure, a luminescent borate glass with high luminous intensity, uniformity and stability is desired to overcome the problems described above.

In one embodiment, a luminescent borate glass is provided with the chemical formula: aM₂O·bY₂O₃·cAl₂O₃·d B₂O₃·eSiO₂·xCeO₂·y Tb₂O₃, wherein M represents at least one element selected from the group consisting of Na, K, and Li; a, b, c, d, e, x, and y are, by mole parts, 4.5∼10.5, 7.5∼8, 26.25∼36, 42∼52, 0∼6, 0.5∼0.8, 0.4∼0.8, respectively.

In a preferable embodiment, the luminescent borate glass is capable of being radiated by UV having a wavelength in a range of 330- 380 nm.

In a preferable embodiment, the luminescent borate glass has an excitation wavelength in a range of 330∼380 nm, an emission wavelength in a range of 530∼560 nm, and a main emission wavelength of 540 nm when radiated by UV peaking at 366 nm.

A preparation method of a luminescent borate glass is also provided including:
weighing raw materials according to a composition of the formula: aM₂O·bY₂O₃·cAl₂O₃·d B₂O₃·eSiO₂·xCeO₂·y Tb₂O₃, wherein M represents at least one selected element from the group consisting of Na, K, and Li; a, b, c, d, e, x, and y are, by mole parts, 4.5∼10.5, 7.5∼8, 26.25∼36, 42∼52, 0∼6, 0.5∼0.8, 0.4∼0.8, respectively;
melting the raw materials and then cooling and molding; and
heat treating the molded glass to obtain the luminescent borate glass.

In a preferable embodiment, the melting temperature is in a range of 1580∼1750°C; the raw materials are melted at 1580∼1750°C for 30 minutes, and then cooled and molded.

In a preferable embodiment, the heat treatment includes: heating the molded glass in reducing atmosphere at the temperature in a range of 650∼900°C for 4∼12 hours, and cooling the molded glass to ambient temperature.

The luminescent borate glass according to the present disclosure has some advantages such as high luminous intensity, uniformity and stability. In addition, the luminescent borate glass can be simply prepared into article, thus it is convenient to be packaged into devices. Accordingly, the luminescent borate glass with high luminous intensity is suitable as a light-emitting medium used in illumination or display field.

The preparation method of a luminescent borate glass according to the present disclosure is simple and its cost is low. The method also solves some problems such as low luminous intensity of the luminous active particles in the glass due to the limitation of glass preparation condition and glass structure.

### BRIEF DESCRIPTION OF THE DRAWINGS

The components in the drawings are not necessarily drawn to scale, the emphasis instead being placed upon clearly illustrating the principles of the present disclosure. Moreover, in the drawings, like reference numerals designate corresponding parts throughout the views.
FIG. 1 is a flowchart of an embodiment of a preparation method of a luminescent borate glass;
FIG. 2 is an excitation and emission spectrum of the luminescent borate glass according to example 1 radiated by 366nm UV using Shimadzu RF-5301 fluorescence spectrometer;
FIG. 3 is an excitation and emission spectrum of the luminescent borate glass according to example 2 radiated by 366nm UV using Shimadzu RF-5301 fluorescence spectrometer;
FIG. 4 is an excitation and emission spectrum of the luminescent borate glass according to example 4 radiated by 366nm UV using Shimadzu RF-5301 fluorescence spectrometer.

### DETAILED DESCRIPTION

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

In a preferable embodiment, a luminescent borate glass is prepared with raw materials consisting essentially of: Al₂O₃; B₂O₃; at least one of oxide, carbonate, and oxalate of Y (Yttrium); at least one of oxide, carbonate, and oxalate of Ce (Cerium); at least one of oxide, carbonate, and oxalate of Tb (Terbium); SiO₂ and/or alkali metal carbonate. The luminescent borate glass includes a chemical formula: aM₂O·bY₂O₃·cAl₂O₃·d B₂O₃·eSiO₂·xCeO₂·y Tb₂O₃, wherein M represents at least one selected element from the group consisting of Na, K, and Li; a, b, c, d, e, x, and y are, by mole parts, 4.5∼10.5, 7.5∼8, 26.25∼36, 42∼52, 0∼6, 0.5∼0.8, 0.4∼0.8, respectively.

As known to a person having ordinary skill in the art that the above mentioned raw materials are only preferred raw materials. Besides that, the raw materials below are available from other materials by heating, oxidation, or other chemical reactions, or from the minerals containing: Al₂O₃; B₂O₃; at least one of oxide, carbonate, and oxalate of Y (Yttrium); at least one of oxide, carbonate, and oxalate of Ce (Cerium); at least one of oxide, carbonate, and oxalate of Tb (Terbium); SiO₂ and/or alkali metal carbonate.

In an illustrated embodiment, Na₂CO₃, Y₂O₃, Al₂O₃, B₂O₃, SiO₂, CeO₂ and Tb2O3 are taken as exemplified raw materials. Appropriate raw materials may be chosen by the person having ordinary skill in the art to obtain the luminescent borate glass by chemical reaction without any further work, the raw materials may be K₂CO₃, Li₂CO₃, and a mixture of them and Na₂CO₃; at least one of oxide, carbonate, and oxalate of Y (Yttrium); at least one of oxide, carbonate, and oxalate of Ce (Cerium); at least one of oxide, carbonate, and oxalate of Tb (Terbium); and reactants which can generate Al₂O₃, B₂O₃. In the preferred embodiment, the purity of the raw materials is no less than AR.

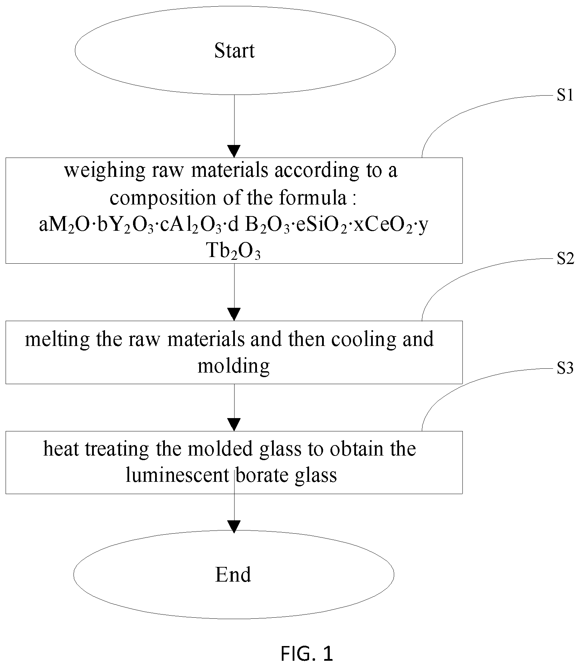

Referring to FIG. 1, an embodiment of a preparation method of a luminescent borate glass includes following steps.

Step S1, raw materials are weighted according to mole parts of each element of the chemical formula: aM₂O·bY_{2·}O₃·cAl₂O₃·d B₂O₃·eSiO₂·xCeO₂·y Tb₂O₃, wherein M represents at least one selected element from the group consisting of Na, K, and Li; a, b, c, d, e, x, and y are, by mole parts, 4.5∼10.5, 7.5∼8, 26.25∼36, 42∼52, 0∼6, 0.5∼0.8, 0.4∼0.8, respectively.

Step S2, the raw materials are melted and then cooled and molded.

For example, the raw materials are melted at 1580∼1750°C for 30 minutes. The melted glass is then poured into a stainless steel plate to be cooled and molded.

Step S3, the molded glass is heat treated to obtain the luminescent borate glass.

The heat treatment includes: placing the molded glass in a reducing environment and heating the molded glass at a temperature in a range of 650∼900°C for 4∼12 hours, and then cooling the molded glass to ambient temperature.

A number of reference examples of the different composition and the preparation method of the luminescent borate glass will be described in more detail.

### Example 1

According to the chemical formula: 15Na₂O-7.75Y₂O₃-26.25Al₂O₃-50B₂O₃-0.5CeO₂-1Tb₂O₃ (mole part), 6.83g of Na₂CO₃, 7.53g of Y₂O₃, 26.62g of B₂O₃, 11.52g of Al₂O₃, 1.6g of Tb₂O₃, and 0.36g of CeO₂ are weighed and ball milled or mortar milled to obtain a uniform mixture. The milled raw materials are introduced into an alumina crucible and heated at a high temperature of 1630°C for 30 minutes, and then the melted glass is poured into the stainless steel plate to be cooled and molded. The molded glass is placed in reducing atmosphere (95% by volume of N₂ and 5% by volume of H₂), and heated at 700°C for 4 hours, and the luminescent borate glass with the chemical formula 15Na₂O-7.75Y₂O₃-26.25Al₂O₃-50B₂O₃-0.5CeO₂-1Tb₂O₃ is finally obtained.

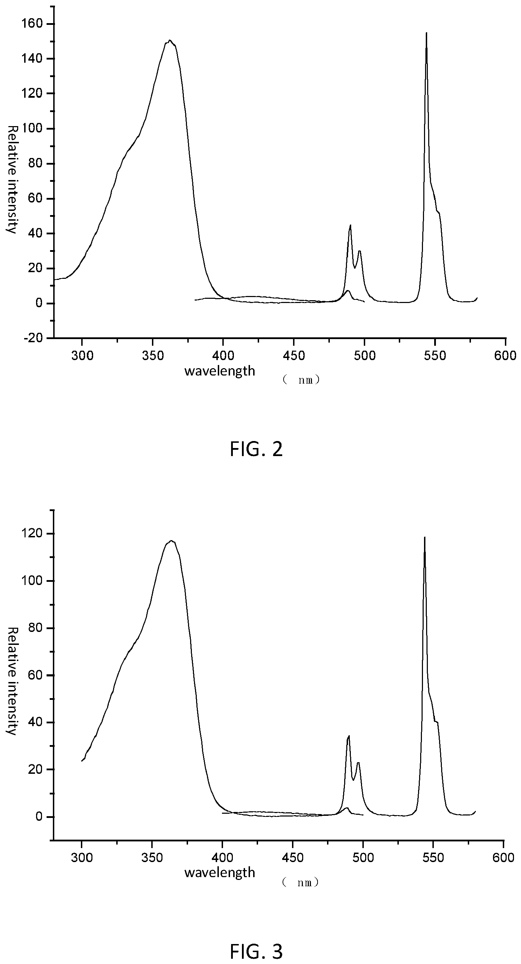

The obtained luminescent borate glass is capable of being radiated by UV (Ultra Violet) with wavelength in a range of 330- 380nm. When radiated by UV peaking at 366 nm, the obtained luminescent borate glass exhibits an intense green light. Referring to FIG. 2, the luminescent borate glass has an excitation wavelength in a range of 330∼380 nm, an emission wavelength in a range of 530∼560 nm, and a main emission wavelength of 540 nm.
In alternative embodiments, the Na₂CO₃ may be replaced by K₂CO₃, Li₂CO₃, Na₂C₂O₄, K₂C₂O₄, or their mixture.

### Example 2

According to the chemical formula: 12Y₂O₃-37Al₂O₃-50B₂O₃-0.5CeO₂-1Tb₂O₃ (mole part), 7.8g of Y₂O₃, 17.8g of B₂O₃, 10.86g of Al₂O₃, 0.24g of CeO₂, and 1.07g of Tb₂O₃ are weighed and ball milled or mortar milled to obtain a uniform mixture. The milled raw materials are introduced into an alumina crucible and heated at a high temperature of 1700°C for 30 minutes, and then the melted glass is poured into the stainless steel plate to be cooled and molded. The molded glass is placed in reducing atmosphere (95% by volume of N₂ and 5% by volume of H₂) and heated at 800°C for 5 hours, and the luminescent borate glass with the chemical formula 12Y₂O₃-37Al₂O₃-50B₂O₃-0.5CeO₂-1Tb₂O₃ is finally obtained.

The obtained luminescent borate glass is capable of being radiated by UV (Ultra Violet) with wavelength in a range of 330∼ 380nm. When radiated by UV peaking at 366 nm, the luminescent borate glass exhibits an intense green light. Referring to FIG.3, the obtained luminescent borate glass has an excitation wavelength in a range of 330∼380 nm, an emission wavelength in a range of 530∼560 nm, and a main emission wavelength of 544 nm.

In alternative embodiments, the oxide of Y, Ce, and Tb may be replaced by at least one of their carbonate or oxalate.

### Example 3

According to the chemical formula: 10Y₂O₃-37Al₂O₃-40B₂O₃-10S₁O₂-0.5CeO₂ -3Tb₂O₃ (mole part), 12.78g of Y₂O₃, 27.99g of B₂O₃, 21.35g of Al₂O₃, 3.39g of SiO₂, 0.48g of CeO₂, and 6.21g of Tb₂O₃ are weighed and ball milled or mortar milled to obtain a uniform mixture. The milled raw materials are introduced into an alumina crucible and heated at a high temperature of 1680°C for 30 minutes, and then the melted glass is poured into the stainless steel plate to be cooled and molded. The molded glass is placed in reducing atmosphere (95% by volume of N₂ and 5% by volume of H₂) to 850°C for 7 hours, and the luminescent borate glass with the chemical formula 10Y₂O₃-37Al₂O₃-40B₂O₃-10SiO₂-0.5CeO₂-3Tb₂O₃ is finally obtained.

### Example 4

According to the chemical formula: 15Na₂O-7Y₂O₃-2625Al₂O₃-49.5B₂O₃ CeO₂-1Tb₂O₃ (mole part), 6.86g of Na₂CO₃, 6.82g of Y₂O₃, 26.44g of B₂O₃, 11.56g of Al₂O₃, 1.11g of CeO₂, and 1.61g of Tb₂O₃ are weighed and ball milled or mortar milled to obtain a uniform mixture. The milled raw materials are introduced into an alumina crucible and heated at a high temperature of 1680°C for 30 minutes, and then the melted glass is poured into the stainless steel plate to be cooled and molded. The molded glass is placed in reducing atmosphere (95% by volume of N₂ and 5% by volume of H₂) and heated at 650°C for 12 hours, and the luminescent borate glass with the chemical formula 15Na₂O-7Y₂O₃-26.25Al₂O₃-49.5 B₂O₃-1.5 CeO₂-1Tb₂O₃ is finally obtained.

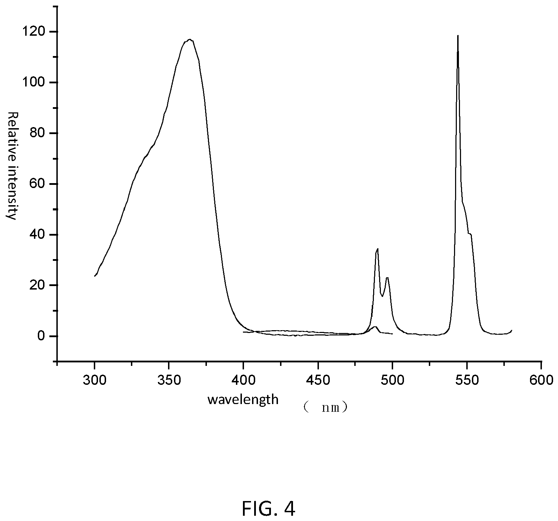

The obtained luminescent borate glass is capable of being radiated by UV (Ultra Violet) with wavelength in a range of 330∼ 380 nm. When radiated by UV peaking at 364 nm, the luminescent borate glass exhibits an intense 1 green light. Referring to FIG.4, the obtained luminescent borate glass has an excitation wavelength in a range of 330∼380 nm, an emission wavelength in a range of 530∼560 nm, and a main emission wavelength of 544 nm.

### Example 5

According to the chemical formula: 20Na₂O-8Y₂O₃-24Al₂O₃-46.5B₂O₃ -1.5CeO₂-1.2Tb₂O₃ (mole part), 6.79g of Na₂CO₃, 5.79g of Y₂O₃, 18.03g of B₂O₃, 7.84g of Al₂O₃, 1.4g of Tb₂O₃, and 0.82g of CeO₂ are weighed and ball milled or mortar milled to obtain a uniform mixture. The milled raw materials are introduced into an alumina crucible and heated at a high temperature of 1630°C for 30 minutes, and then the melted glass is poured into the stainless steel plate to be cooled and molded. The molded glass is placed in reducing atmosphere (95% by volume of N₂ and 5% by volume of H₂), and heated at 650°C for 10 hours, and the luminescent borate glass with the chemical formula 20Na₂O-8Y₂O₃-24Al₂O₃-46.5B₂O₃-1.5 CeO₂-1.2Tb₂O₃ is finally obtained.

### Example 6

According to the chemical formula: 10.5Na₂O-7.5Y₂O₃-20Al₂O₃-60B₂O₃- 0.8CeO₂-1.5Tb₂O₃ (mole part), 6.01g of Na₂CO₃, 9.15g of Y₂O₃, 40.11g of B₂O₃, 11.02g of Al₂O₃, 3.02g of Tb₂O₃, and 0.74g of CeO₂ are weighed and ball milled or mortar milled to obtain a uniform mixture. The milled raw materials are introduced into an alumina crucible and heated at a high temperature of 1630°C for 30 minutes, and then the melted glass is poured into the stainless steel plate to be cooled and molded. The molded glass is placed in reducing atmosphere (95% by volume of N₂ and 5% by volume of H₂), and heated at 750°Cfor 6 hours, and the luminescent borate glass with the chemical formula 10.5Na₂O-7.5Y₂O₃-20Al₂O₃-60B₂O₃- 0.8CeO₂-1.5Tb₂O₃ is finally obtained.

### Example 7

According to the chemical formula: 4.5Na₂O-10Y₂O₃-40Al₂O₃-45B₂O₃-0.3CeO₂-0.5Tb₂O₃ (mole part), 2.38g of Na₂CO₃, 11.3g of Y₂O₃, 27.86g of B₂O₃, 20.42g of Al₂O₃, 0.93g of Tb₂O₃, and 0.25g of CeO₂ are weighed and ball milled or mortar milled to obtain a uniform mixture. The milled raw materials are introduced into an alumina crucible and heated at a high temperature of 1750°C for 30 minutes, and then the melted glass is poured into the stainless steel plate to be cooled and molded. The molded glass is placed in reducing atmosphere (95% by volume of N₂ and 5% by volume of H₂), and heated at 750°C for 6 hours, and the luminescent borate glass with the chemical formula 4.5Na₂O-10Y₂O₃-40Al₂O₃-45B₂O₃-0.3CeO₂-0.5Tb₂O₃ is finally obtained.

### Example 8

According to the chemical formula: 11Y₂O₃-33Al₂O₃-55B₂O₃-0.3CeO₂-0.8Tb₂O₃ (mole part), 12.39g of Y₂O₃, 33.92g of B₂O₃, 16.78g of Al₂O₃, 1.49g of Tb₂O₃, and 0.25g of CeO₂ are weighed and ball milled or mortar milled to obtain a uniform mixture. The milled raw materials are introduced into an alumina crucible and heated at a high temperature of 1680°C for 30 minutes, and then the melted glass is poured into the stainless steel plate to be cooled and molded. The molded glass is placed in reducing atmosphere (95% by volume of N₂ and 5% by volume of H₂), and heated at 900°C for 12 hours, and the luminescent borate glass with the chemical formula 11Y₂O₃-33Al₂O₃-55B₂O₃-0.3CeO₂-0.8Tb₂O₃ is finally obtained.

### Example 9

According to the chemical formula: 12Y₂O₃-36Al₂O₃-52B₂O₃-0.1CeO₂-0.1Tb₂O₃ (mole part), 13.47g of Y₂O₃, 31.97g of B₂O₃, 18.25g of Al₂O₃, 0.18g of Tb₂O₃, and 0.08g of CeO₂ are weighed and ball milled or mortar milled to obtain a uniform mixture. The milled raw materials are introduced into an alumina crucible and heated at a high temperature of 1680°C for 30 minutes, and then the melted glass is poured into the stainless steel plate to be cooled and molded. The molded glass is placed in reducing atmosphere (95% by volume of N₂ and 5% by volume of H₂), and heated at 700°C for 6 hours, and the luminescent borate glass with the chemical formula 12Y₂O₃-36Al₂O₃-52B₂O₃-0.1CeO₂-0.1Tb₂O₃ is finally obtained.

### Example 10

According to the chemical formula: 15Na₂O-7.5Y₂O₃-26.5Al₂O₃-50B₂O₃-0.3 CeO₂-0.7Tb₂O₃ (mole part), 2.38g of Na₂CO₃, 11.3g of Y₂O₃, 27.86g of B₂O₃, 20.42g of Al₂O₃, 0.93g of Tb₂O₃, and 0.25g of CeO₂ are weighed and ball milled or mortar milled to obtain a uniform mixture. The milled raw materials are introduced into an alumina crucible and heated at a high temperature of 1750°C for 30 minutes, and then the melted glass is poured into the stainless steel plate to be cooled and molded. The molded glass is placed in reducing atmosphere (95% by volume of N₂ and 5% by volume of H₂), and heated at 750°C for 6 hours, and the luminescent borate glass with the chemical formula 15Na₂O-7.5Y₂O₃-26.5Al₂O₃-50B₂O₃-0.3CeO₂-0.7Tb₂O₃ is finally obtained.

### Example 11

According to the chemical formula: 10Y₂O₃-37Al₂O₃-50B₂O₃-0.5CeO₂-3Tb₂O₃ (mole part), 6.33g of Y₂O₃, 17.33g of B₂O₃, 10.58g of Al₂O₃, 3.14g of Tb₂O₃, and 0.24g of CeO₂ are weighed and ball milled or mortar milled to obtain a uniform mixture. The milled raw materials are introduced into an alumina crucible and heated at a high temperature of 1680°C for 30 minutes, and then the melted glass is into the stainless steel plate to be cooled and molded. The molded glass is placed in reducing atmosphere (95% by volume of N₂ and 5% by volume of H₂), and heated at 850°C for 7 hours, and the luminescent borate glass with the chemical formula 10Y₂O₃-37Al₂O₃-50B₂O₃-0.5CeO₂-3Tb₂O₃ is finally obtained.

### Example 12

According to the chemical formula: 10Na₂O-7Y₂O₃-25Al₂O₃-42B₂O₃-15SiO₂-0.3 CeO₂-0.5Tb₂O₃ (mole part), 7.21g of Na₂CO₃, 10.76g of Y₂O₃, 35.37g of B₂O₃, 17.35g of Al₂O₃, 6.13g of SiO₂, 1.24g of Tb₂O₃, and 0.34g of CeO₂ are weighed and ball milled or mortar milled to obtain a uniform mixture. The milled raw materials are introduced into an alumina crucible and heated at a high temperature of 1680°C for 30 minutes, and then the melted glass is poured into the stainless steel plate to be cooled and molded. The molded glass is placed in reducing atmosphere (95% by volume of N₂ and 5% by volume of H₂), and heated at 780°C for 6 hours, and the luminescent borate glass with the chemical formula 10Na₂O-7Y₂O₃-25Al₂O₃-42 B₂O₃-15SiO₂-0.3 CeO₂-0.5Tb₂O₃ is finally obtained.

### Example 13

According to the chemical formula: 15Na₂O-8Y₂O₃-24Al₂O₃-46B₂O₃-6SiO₂-0.3 CeO₂-0.5Tb₂O₃ (mole part), 10.61g of Na₂CO₃, 12.06g of Y₂O₃, 37.99g of B₂O₃, 16.34g of Al₂O₃, 2.4g of SiO₂, 1.21g of Tb₂O₃, and 0.34g of CeO₂ are weighed and ball milled or mortar milled to obtain a uniform mixture. The milled raw materials are introduced into an alumina crucible and heated at a high temperature of 1680°C for 30 minutes, and then the melted glass is poured into the stainless steel plate to be cooled and molded. The molded glass is placed in reducing atmosphere (95% by volume of N₂ and 5% by volume of H₂), and heated at 780°C for 5 hours, and the luminescent borate glass with the chemical formula 15Na₂O-8Y₂O₃-24Al₂O₃-46 B₂O₃-6SiO₂-0.3CeO₂-0.5Tb₂O₃ is finally obtained.

### Example 14

According to the chemical formula: 12Y₂O₃-35Al₂O₃-50B₂O₃-1.2CeO₂-1.8Tb₂O₃ (mole part), 15.3g of Y₂O₃, 34.91g of B₂O₃, 20.14g of Al₂O₃, 3.71g of Tb₂O₃, and 1.16g of CeO₂ are weighed and ball milled or mortar milled to obtain a uniform mixture. The milled raw materials are introduced into an alumina crucible and heated at a high temperature of 1680°C for 30 minutes, and then the melted glass is poured into the stainless steel plate to be cooled and molded. The molded glass is placed in reducing atmosphere (95% by volume of N₂ and 5% by volume of H₂), and heated at 750°C for 4 hours, and the luminescent borate glass with the chemical formula 12Y₂O₃-35Al₂O₃-50B₂O₃-1.2CeO₂-1.8Tb₂O₃ is finally obtained.

### Example 15

According to the chemical formula: 10Na₂O-15Y₂O₃-25Al₂O₃-40B₂O₃-10SiO₂-0.2CeO₂-0.4Tb₂O₃ (mole part), 4.19g of Na₂CO₃, 13.4g of Y₂O₃, 19.57g of B₂O₃, 10.08g of Al₂O₃, 2.37g of SiO₂, 0.57g of Tb₂O₃, and 0.06g of CeO₂ are weighed and ball milled or mortar milled to obtain a uniform mixture. The milled raw materials are introduced into an alumina crucible and heated at a high temperature of 1680°C for 30 minutes, and then the melted glass is poured into the stainless steel plate to be cooled and molded. The molded glass is placed in reducing atmosphere (95% by volume of N₂ and 5% by volume of H₂), and heated at 780°C for 5 hours, and the luminescent borate glass with the chemical formulal 10Na₂O-15Y₂O₃-25Al₂O₃-40B₂O₃-100SiO₂-0.2 CeO₂-0.4Tb₂O₃ is finally obtained.

### Example 16

According to the chemical formula: 15Na₂O-8Y₂O₃-24Al₂O₃-46B₂O₃-3SiO₂-0.3 CeO₂-0.5Tb₂O₃ (mole part), 10.61g of Na₂CO₃, 12.06g of Y₂O₃, 37.99g of B₂O₃, 16.34g of Al₂O₃, 1.2g of SiO₂, 1.21g of Tb₂O₃, and 0.34g of CeO₂ are weighed and ball milled or mortar milled to obtain a uniform mixture. The milled raw materials are introduced into an alumina crucible and heated at a high temperature of 1680°C for 30 minutes, and then the melted glass is poured into the stainless steel plate to be cooled and molded. The molded glass is placed in reducing atmosphere (95% by volume of N₂ and 5% by volume of H₂), and heated at 780°C for 5 hours, and the luminescent borate glass with the chemical formula 15Na₂O-8Y₂O₃-24Al₂O₃-46 B₂O₃-3SiO₂-0.3CeO₂-0.5Tb₂O₃ is finally obtained.

Although the invention has been described in language specific to structural features and/or methodological acts, it is to be understood that the invention defined in the appended claims is not necessarily limited to the specific features or acts described. Rather, the specific features and acts are disclosed as sample forms of implementing the claimed invention.

## Claims

1. A luminescent borate glass, consisting of a composition with the chemical formula:
aM₂O·bY₂O₃·cAl₂O₃·dB₂O₃·eSiO₂·xCeO₂·yTb₂O₃,
wherein M represents at least one element selected from the group consisting of Na, K, and Li;
a, b, c, d, e, x, and y are, by mole parts, 4.5∼10.5, 7.5∼8, 26.25∼36, 42∼52, 0∼6, 0.5∼0.8, 0.4∼0.8, respectively.

2. The luminescent borate glass according to any of claim 1, wherein the luminescent borate glass is capable of being radiated by UV with wavelength in a range of 330∼ 380 nm.

3. The luminescent borate glass according to claim 2, wherein the luminescent borate glass has an excitation wavelength in a range of 330∼380 nm, an emission wavelength in a range of 530∼560 nm, and a main emission wavelength of 540 nm when radiated by UV peaking at 366 nm.

4. A preparation method of a luminescent borate glass, comprising:
weighing raw materials according to a composition of the formula: aM₂O·bY₂O₃·cAl₂O₃·d B₂O₃·eSiO₂·xCeO₂·y Tb₂O₃, wherein M represents at least one selected element from the group consisting of Na, K, and Li; a, b, c, d, e, x, and y are, by mole parts, 4.5∼10.5, 7.5∼8, 26.25∼36, 42∼52, 0∼6, 0.5∼0.8, 0.4∼0.8, respectively;
melting the raw materials and then cooling and molding; and
heat treating the molded glass to obtain the luminescent borate glass.

5. The preparation method according to claim 4, wherein the melting temperature is in a range of 1580∼1750'C; the raw materials are melted at 1580∼1750°C for 30 minutes, and then cooled and molded.

6. The preparation method according to claim 5, wherein the heat treatment comprises: heating the molded glass in reducing atmosphere at the temperature in a range of 650∼900°C for 4∼12 hours, and cooling the molded glass to ambient temperature.

## Patentansprüche

1. Lumineszierendes Boratglas, bestehend aus einer Zusammensetzung mit der chemischen Formel:
**aM₂O·bY₂O₃·cAl₂O₃·dB₂O₃·eSiO₂·xCeO₂·yTb₂O₃,**
wobei M mindestens ein Element darstellt, das aus der Gruppe, bestehend aus Na, K und Li, ausgewählt ist,
a, b, c, d, e, x und y, in Teilen bezogen auf Mol, 4,5∼10,5, 7,5∼8, 26,25∼36, 42∼52, 0∼6, 0,5∼0,8 bzw. 0,4∼0,8 sind.

2. Lumineszierendes Boratglas nach einem aus Anspruch 1, wobei das lumineszierende Boratglas durch UV mit einer Wellenlänge in einem Bereich von 330∼380 nm bestrahlt werden kann.

3. Lumineszierendes Boratglas nach Anspruch 2, wobei das lumineszierende Boratglas eine Anregungswellenlänge in einem Bereich von 330∼380 nm, eine Emissionswellenlänge in einem Bereich von 530∼560 nm und eine Hauptemissionswellenlänge von 540 nm aufweist, wenn es mittels UV mit einem Maximum bei 366 nm bestrahlt wird.

4. Herstellungsverfahren für ein lumineszierendes Boratglas, umfassend:
Abwiegen von Rohmaterialien gemäß einer Zusammensetzung der Formel:
**aM₂O·bY₂O₃·cAl₂O₃·dB₂O₃·eSiO₂·xCeO₂·yTb₂O₃,**
wobei M mindestens ein aus der aus Na, K und Li bestehenden Gruppe ausgewähltes Element darstellt; a, b, c, d, e, x und y, in Teilen bezogen auf Mol, 4,5∼10,5, 7,5∼8, 26,25∼36, 42∼52, 0∼6, 0,5∼0, bzw. 0,4∼0, sind,
Schmelzen der Rohmaterialien und anschließendes Abkühlen und Formen und
Wärmebehandeln des geformten Glases, um das lumineszierende Boratglas zu erhalten.

5. Herstellungsverfahren nach Anspruch 4, wobei die Schmelztemperatur in einem Bereich von 1580∼1750°C liegt, die Rohmaterialien bei 1580∼1750°C für 30 Minuten geschmolzen und dann abgekühlt und geformt werden.

6. Herstellungsverfahren nach Anspruch 5, wobei die Wärmebehandlung Folgendes umfasst:
Erhitzen des geformten Glases unter reduzierender Atmosphäre bei einer Temperatur in einem Bereich von 650∼900°C für 4∼12 Stunden und Abkühlen des geformten Glases auf Umgebungstemperatur.

## Revendications

1. Verre de borate luminescent, constitué d'une composition répondant à la formule chimique :
aM₂O·bY₂O₃·cAl₂O₃·dB₂O₃·eSiO₂·xCeO₂·yTb2O₃,
dans laquelle M représente au moins un élément choisi dans le groupe constitué par Na, K et Li ;
a, b, c, d, e, x et y valent, en parties en mole, 4,5∼10,5, 7,5∼8, 26,25∼36, 42∼52, 0∼6, 0,5∼0,8, 0,4∼0,8, respectivement.

2. Verre de borate luminescent selon la revendication 1, le verre de borate luminescent pouvant être exposé à des rayons UV ayant une longueur d'onde dans une plage de 330∼380 nm.

3. Verre de borate luminescent selon la revendication 2, le verre de borate luminescent ayant une longueur d'onde d'excitation dans une plage de 330∼380 nm, une longueur d'onde démission dans une plage de 530∼560 nm et une longueur d'onde d'émission principale de 540 nm lorsqu'il est exposé à des rayons UV ayant un pic à 366 nm.

4. Procédé de préparation d'un verre de borate luminescent, comprenant :
le pesage de matières premières selon une composition de formule :
aM₂O·bY₂O₃·cAl₂O₃·dB₂O₃·eSiO₂·xCeO₂·yTb₂O₃,
dans laquelle M représente au moins un élément choisi provenant du groupe constitué par Na, K et Li ; a, b, c, d, e, x et y valent, en parties en mole, 4,5∼10,5, 7,5∼8, 26,25∼36, 42∼52, 0∼6, 0,5∼0,8, 0,4∼0,8, respectivement ;
la fusion des matières premières et ensuite le refroidissement et le moulage ; et
le traitement thermique du verre moulé pour obtenir le verre de borate luminescent.

5. Procédé de préparation selon la revendication 4, dans lequel la température de fusion est dans une plage de 1580∼1750 °C ; les matières premières sont fondues à 1580∼1750 °C pendant 30 minutes et ensuite refroidies et moulées.

6. Procédé de préparation selon la revendication 5, dans lequel le traitement thermique comprend :
le chauffage du verre moulé dans une atmosphère réductrice à une température dans une plage de 650∼900 °C pendant 4∼12 heures et le refroidissement du verre moulé à température ambiante.
